# EUROPÄISCHE PATENTANMELDUNG

(11) **EP 2 811 287 A2**
(43) Veröffentlichungstag der Anmeldung: **10.12.2014**
(21) Anmeldenummer: 14165545.6
(22) Anmeldetag: 23.04.2014
(51) Int. Cl.: G01N 21/88

(54) **Verfahren und Vorrichtung zur Kontrolle der Oberfläche von Bahnwaren**

(30) Priorität: 03.06.2013 DE 102013105671
(71) Anmelder: ContiTech Elastomer-Beschichtungen GmbH, 30165 Hannover (DE)
(72) Erfinder: Hormes, Ingo, 37154 Northeim (DE); Zahel, Helge, 37154 Northeim (DE)
(74) Vertreter: Finger, Karsten

(57) **Zusammenfassung**

Die vorliegende Erfindung betrifft ein Verfahren zur Kontrolle der Oberfläche (2) von Bahnwaren (1), mit den Schritten:
• optisches Erfassen der Oberfläche (2) einer Bahnware (1), vorzugsweise einer sich bewegenden Bahnware (1),
• Erkennen einer Fehlstelle (3) der Oberfläche (2) der Bahnware (1), und
• im Ansprechen auf das Erkennen der Fehlstelle (3), Markieren der Fehlstelle (3).

Das Verfahren ist dadurch gekennzeichnet, dass das Markieren der Fehlstelle (3) mittels einer Positionsmarkierungseinheit (4) erfolgt, die von einem Benutzer in der Hand geführt und deren Position automatisch erfasst werden kann.

## Beschreibung

Die Erfindung betrifft ein Verfahren und eine Vorrichtung zur Kontrolle der Oberfläche von Bahnwaren.

Bei der Produktion von Bahnwaren, insbesondere von beschichteten Bahnwaren wie z.B. Drucktüchern, ist es vorteilhaft, eine Qualitätskontrolle der Oberfläche durchzuführen. Diese kann z.B. durch eine Person erfolgen, die dann erkannte Fehlstellen auf der Bahnware markiert und in einem Protokoll notiert. Hierzu läuft die Bahnware vor dem Kontrolleur entlang und wird von ihm mit den Augen auf Fehler beobachtet. Wird eine Fehlstelle erkannt, erfolgt die Markierung dieser und die Position der Markierung wird z.B. handschriftlich in ein Protokoll eingetragen.

Nachteilig ist hierbei, dass diese Art der Qualitätskontrolle vergleichsweise lange dauert, da sowohl die Anbringung der Markierung als auch die Protokollierung dieser Position durch eine Person erfolgen. Auch kann dies zu Ungenauigkeiten zwischen der markierten und eigentlichen Position der Fehlstelle führen.

Es ist bekannt, zu diesem Zweck auf mechanische Wegaufnehmer einzusetzen, die durch den Kontrolleur über die Oberfläche der Bahnware geführt werden können, um die Position der Fehlstelle zu erfassen und zu protokollieren. Die Bedienung und Handhabung derartiger Wegaufnehmer erfordert jedoch gerade bei breiten Bahnwaren einen gewissen Kraftaufwand und ist für den Bediener ermüdend. Auch kostet die Positionierung des mechanischen Wegaufnehmers über der Fehlstelle Zeit und kann bei Kontakt mit der Oberfläche der Bahnware diese beschädigen.

Die Aufgabe der vorliegenden Erfindung ist es daher, eine Qualitätskontrolle für Bahnwaren der eingangs beschriebenen Art bereit zu stellen, die schneller, einfacher und bzw. oder genauer durchgeführt werden kann als bisher bekannt.

Die Aufgabe wird erfindungsgemäß durch ein Verfahren mit den Merkmalen gemäß Anspruch 1 und eine Vorrichtung mit den Merkmalen gemäß Anspruch 8 gelöst. Vorteilhafte Weiterbildungen sind in den Unteransprüchen beschrieben.

Somit betrifft die vorliegende Erfindung ein Verfahren zur Kontrolle der Oberfläche von Bahnwaren mit den Schritten:
- optisches Erfassen der Oberfläche einer Bahnware, vorzugsweise einer sich bewegenden Bahnware,
- Erkennen einer Fehlstelle der Oberfläche der Bahnware, und
- im Ansprechen auf das Erkennen der Fehlstelle, Markieren der Fehlstelle.

Das Verfahren ist dadurch gekennzeichnet, dass das Markieren der Fehlstelle mittels einer Positionsmarkierungseinheit erfolgt, die von einem Benutzer in der Hand geführt und deren Position automatisch erfasst werden kann.

Der vorliegenden Erfindung liegt die Erkenntnis zugrunde, dass die Position einer Fehlstelle einer Bahnware über die Position einer Positionsmarkierungseinheit erfasst werden kann, die von einem Benutzer in der Hand geführt wird. Hierzu wird die Positionsmarkierungseinheit in der Hand des Kontrolleurs gehalten, von ihm über die erkannte Fehlstelle geführt und automatisch an dieser Position erfasst oder sogar durchgängig verfolgt und im Falle des Vorliegens einer Fehlstelle die Position der Positionsmarkierungseinheit automatisch erfasst und als Position der Fehlstelle erkannt. Diese Position kann ausgegeben und bzw. oder gespeichert werden. Die Einordnung der aktuellen Position der Positionsmarkierungseinheit als Position einer Fehlstelle erfolgt durch den Kontrolleuer, d.h. es liegt ein halbautomatisches Verfahren zur Qualitätskontrolle vor.

Gemäß einem weiteren Aspekt der vorliegenden Erfindung weist das Markieren der Fehlstelle mittels der Positionsmarkierungseinheit den Schritt auf:
- drahtloses Aussenden wenigstens eines Signals.

Durch die drahtlose Erfassung der Positionsmarkierungseinheit wird die Handhabung dieser für den Kontrolleur deutlich vereinfacht, weil keinerlei Kabel etc. bei der Führung der Positionsmarkierungseinheit sowie bei der Bewegung des Kontrolleurs bei der Arbeit zu beachten sind. Auch könnte durch Kabel etc. Schmutz auf die Oberfläche der Bahnware zumindest dann gelangen, wenn die Positionsmarkierungseinheit samt Kabel über die Bahnware geführt wird. Ferner kann auf mechanische Wegaufnehmer verzichtet werden, was die Ermüdung des Bedieners reduziert und auch Beschädigungen der Oberfläche der Bahnware durch den mechanischen Wegaufnehmer vermeidet.

Das ausgesendete Signal kann ein Infrarotsignal, ein optisch sichtbares Lichtsignal, ein Ultraschallsignal oder eine elektromagnetische Strahlung sein. Auch kann die drahtlose Übertragung mittels Bluetooth-Technik, WLAN-Technik etc. erfolgen. Die Positionsmarkierungseinheit kann vorzugsweise als Stift oder Stempel ausgebildet sein. Diese Objekte ermöglichen eine einfache und sichere Handhabung durch den Kontrolleur, auch bei einem längeren Einsatz.

Gemäß einem weiteren Aspekt der vorliegenden Erfindung weist das Markieren der Fehlstelle mittels der Positionsmarkierungseinheit ferner den Schritt auf:
- Empfangen des drahtlos ausgesendeten Signals der Positionsmarkierungseinheit.

Der Empfänger entspricht der Natur des ausgesendeten Signals, d.h. kann ein Infrarotempfänger, ein Empfänger für sichtbares Licht, ein Ultraschallempfänger oder ein Empfänger für elektromagnetische Strahlung sein. Auch könnten Bluetooth- bzw. WLAN-Empfänger eingesetzt werden. Derartige drahtlose Übertragungstechniken sind mittlerweile weit verbreitet und daher einfach und kostengünstig verfügbar sowie erprobt und zuverlässig. Werden mehrere Empfänger gemeinsam verwendet, kann die Position der Positionsmarkierungseinheit mittels Triangulation ermittelt werden.

Gemäß einem weiteren Aspekt der vorliegenden Erfindung weist das Markieren der Fehlstelle mittels der Positionsmarkierungseinheit den Schritt auf:
- Erfassen der Positionsmarkierungseinheit mittels einer Kamera.

Hierzu können optische Bilderkennungsverfahren verwendet werden, um die Positionsmarkierungseinheit aufgrund ihrer Kontur, ihrer Farbe und bzw. oder besonderer optischer Markierungen wie einem vorbestimmten Farbecode einfach und zuverlässig gegenüber der Umgebung erkennen zu können. Bilderkennungsverfahren für diese Anwendung vorzusehen ist auch deshalb vorteilhaft, weil die zu kontrollierende Bahnware i. Allg. eine einheitliche, glatt und einfarbige Oberfläche aufweist, vor der sich ein optisch zu erkennendes Objekt deutlich abhebt und hierdurch vergleichsweise einfach und sicher zu erkennen ist.

Gemäß einem weiteren Aspekt der vorliegenden Erfindung ist die Kamera senkrecht über der Oberfläche der Bahnware angeordnet.

Vorteilhaft ist hierbei, dass auf diese Weise im Gegensatz zu einer schräg zur XY-Ebene angeordneten Kamera kein bzw. ein nur unwesentlicher Versatz der Positionsmarkierungseinheit und der darunter liegenden Oberfläche der Bahnware beachtet, d.h. z.B. heraus gerechnet werden muss, was die Auswertung der Position vereinfacht und genau werden lässt. So kann die Position der Fehlstelle einfach und mit hoher Verlässlichkeit als direkt unter der Positionsmarkierungseinheit liegend angesehen werden.

Gemäß einem weiteren Aspekt der vorliegenden Erfindung weist das Markieren der Fehlstelle mittels der Positionsmarkierungseinheit den Schritt auf:
- Aussenden einer Information durch die Positionsmarkierungseinheit über das Vorliegen einer Fehlstelle an ihrer aktuellen Position.

Über diese Ausgabe können die erfasste Position der Positionsmarkierungseinheit und die Position der durch den Kontrolleur erkannten Fehlstelle einander gleichgesetzt werden. Hierzu kann z.B. durch eine Eingabe des Kontrolleurs an der Positionsmarkierungseinheit ein entsprechendes Signal ausgesendet werden, der bei einer kontinuierlichen Verfolgung der Position der Positionsmarkierungseinheit die aktuelle Position der Positionsmarkierungseinheit als Fehlstelle kennzeichnet oder der die Erkennung der aktuellen Position der Positionsmarkierungseinheit auslöst.

Gemäß einem weiteren Aspekt der vorliegenden Erfindung weist das Verfahren den Schritt auf:
- automatisches Protokollieren der als Fehlstelle erkannten Position der Positionsmarkierungseinheit.

Auf diese Weise kann auch diese Aufgabe des Kontrolleurs automatisch übernommen werden, um ihn zu entlasten und das Verfahren der Qualitätskontrolle zu beschleunigen und in der Genauigkeit der Angaben der Fehlstellen zu verbessern.

Die vorliegende Erfindung betrifft auch eine Vorrichtung zur Kontrolle der Oberfläche von Bahnwaren nach einem Verfahren wie zuvor beschrieben mit einer Positionsmarkierungseinheit, die eingerichtet ist, durch einen Benutzer in der Hand über die Oberfläche der Bahnware geführt zu werden und ein Signal drahtlos auszusenden, und wenigstens einer Empfängereinheit und bzw. oder Kamera, die eingerichtet ist, das drahtlos ausgesendet Signal der Positionsmarkierungseinheit und bzw. oder die Positionsmarkierungseinheit optisch zu erfassen.

Ein Ausführungsbeispiel und weitere Vorteile der Erfindung werden nachstehend im Zusammenhang mit den folgenden Figuren erläutert. Darin zeigt:

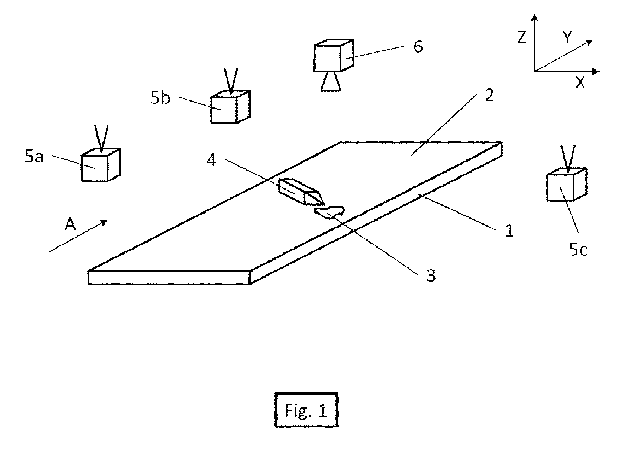

- Fig. 1: eine perspektivische schematische Darstellung einer Vorrichtung zur Kontrolle der Oberfläche von Bahnwaren nach einem erfindungsgemäßen Verfahren.

Fig. 1 zeigt eine perspektivische schematische Darstellung einer Vorrichtung zur Kontrolle der Oberfläche 2 von Bahnwaren 1 nach einem erfindungsgemäßen Verfahren. Die zu kontrollierende Bahnware 1 wird dabei in einer Bewegungsrichtung A bewegt, die der Y-Richtung eines kartesischen Koordinatensystems entspricht mit der X-Richtung als Breite der Bahnware 1 und der Z-Richtung als Dicke der Bahnware 1. Die Oberfläche 2 der Bahnware 1 weist eine Fehlstelle 3 auf. Diese ist durch den Kontrolleur zu erkennen. Ist dies erfolgt, wird eine Positionsmarkierungseinheit 4 in Form eines Stiftes 4 vom Kontrolleur mit der Hand über die Fehlstelle 3 geführt und z.B. durch Betätigen eines Tasters am Stift 4 ein Signal drahtlos ausgesendet, z.B. als Infrarot-Signal. Dieses Signal wird über wenigstens einen IR-Empfänger 5a-5c empfangen. Das Signal zeigt an, dass an der Stelle, an der sich der Stift 4 aktuell über der Oberfläche 2 der Bahnware 1 befindet, eine Fehlstelle 3 erkannt wurde. Daher wird diese Position der Bahnware 1 als Fehlstelle 3 protokolliert. Die Erkennung der Position des Stiftes 4 erfolgt z.B. über Triangulation mittels z.B. drei räumlich verteilter IR-Empfänger 5a-5c und bzw. oder mittels einer Kamera 6 durch Bilderkennung des Stiftes 4.

### Bezugszeichenliste

### (Teil der Beschreibung)

- A: Bewegungsrichtung der Bahnware 1
- X: X-Achse in kartesischen Koordinaten
- Y: Y-Achse in kartesischen Koordinaten
- Z: Z-Achse in kartesischen Koordinaten

- 1: Bahnware
- 2: Oberfläche der Bahnware
- 3: Fehlstelle der Oberfläche 2
- 4: Positionsmarkierungseinheit, IR-Stift
- 5a-5c: Empfängereinheit(en), IR-Empfänger
- 6: optische Erfassungseinheit, Kamera

## Patentansprüche

1. Verfahren zur Kontrolle der Oberfläche (2) von Bahnwaren (1), mit den Schritten:
optisches Erfassen der Oberfläche (2) einer Bahnware (1), vorzugsweise einer sich bewegenden Bahnware (1),
Erkennen einer Fehlstelle (3) der Oberfläche (2) der Bahnware (1), und
im Ansprechen auf das Erkennen der Fehlstelle (3), Markieren der Fehlstelle (3),
**dadurch gekennzeichnet, dass**
das Markieren der Fehlstelle (3) mittels einer Positionsmarkierungseinheit (4) erfolgt, die von einem Benutzer in der Hand geführt und deren Position automatisch erfasst werden kann.

2. Verfahren nach Anspruch 1, wobei das Markieren der Fehlstelle (3) mittels der Positionsmarkierungseinheit (4) den Schritt aufweist:
drahtloses Aussenden wenigstens eines Signals.

3. Verfahren nach Anspruch 2, wobei das Markieren der Fehlstelle (3) mittels der Positionsmarkierungseinheit (4) ferner den Schritt aufweist:
Empfangen des drahtlos ausgesendeten Signals der Positionsmarkierungseinheit (4).

4. Verfahren nach einem der vorherigen Ansprüche, wobei das Markieren der Fehlstelle (3) mittels der Positionsmarkierungseinheit (4) den Schritt aufweist:
Erfassen der Positionsmarkierungseinheit (4) mittels einer Kamera (6).

5. Verfahren nach Anspruch 4,
wobei die Kamera (6) senkrecht über der Oberfläche (2) der Bahnware (1) angeordnet ist.

6. Verfahren nach einem der vorherigen Ansprüche, wobei das Markieren der Fehlstelle (3) mittels der Positionsmarkierungseinheit (4) den Schritt aufweist:
Aussenden einer Information durch die Positionsmarkierungseinheit (4) über das Vorliegen einer Fehlstelle (3) an ihrer aktuellen Position.

7. Verfahren nach einem der vorherigen Ansprüche, ferner mit dem Schritt:
automatisches Protokollieren der als Fehlstelle (3) erkannten Position der Positionsmarkierungseinheit (4).

8. Vorrichtung zur Kontrolle der Oberfläche (2) von Bahnwaren (1) nach einem Verfahren gemäß der vorherigen Ansprüche, mit
einer Positionsmarkierungseinheit (4), die eingerichtet ist, durch einen Benutzer über die Oberfläche (2) der Bahnware (1) geführt zu werden und ein Signal drahtlos auszusenden, und
wenigstens einer Empfängereinheit (5a-5c) und/oder Kamera (6), die eingerichtet ist, das drahtlos ausgesendet Signal der Positionsmarkierungseinheit (4) und/oder die Positionsmarkierungseinheit (4) optisch zu erfassen.
